# EUROPEAN PATENT SPECIFICATION

(11) **EP 2 577 243 B1**
(45) Date of publication and mention of the grant of the patent: **25.02.2015**
(21) Application number: 10727917.6
(22) Date of filing: 26.05.2010
(51) Int. Cl.: G01J 5/08, G08B 13/191

(54) **AN INTERNAL MASKING MECHANISM FOR A MOTION SENSOR UNIT**
INTERNER MASKIERUNGSMECHANISMUS FÜR EINE BEWEGUNGSSENSOREINHEIT
MÉCANISME DE MASQUAGE INTERNE POUR UNITÉ DE DÉTECTION DE MOUVEMENT

(43) Date of publication of application: 10.04.2013
(73) Proprietor: IQ Group SDN BHD, 11900 Pulau Pinang (MY)
(72) Inventor: SANSON, Gilles, 11900 Pulau Pinang (MY); LOH, Kheng Boon, 11900 Pulau Pinang (MY); LAI, Kong Yeow, 11900 Pulau Pinang (MY)
(74) Representative: Algemeen Octrooi- en Merkenbureau B.V.
(86) International application number: PCT/IB2010/052330
(87) International publication number: WO 2011/148231

(56) References cited:
- EP-A- 1 847 822
- US-A- 4 873 469

## Description

### TECHNICAL FIELD

The present invention relates generally to a masking mechanism for a motion sensor unit. It relates specifically to an internal masking mechanism movable suspendedly in a substantially up and down direction, operable from an external adjustment knob and preferably equipped with a visual means for long or short distance indication.

### BACKGROUND ART

Prior art motion sensor units are used to detect movement in order to switch equipment on and off, usually outdoor or indoor lighting. They generally employ a passive infrared motion sensor and often include a photo-electric cell which prevents operation during daylight hours. Furthermore, the detection range of the passive infrared motion sensor unit is often set as "long distance operation zone" or "short distance operation zone". A prior art motion sensor unit comprises an arc lens assembly, a control module equipped with at least one passive infrared motion sensor and electrical circuitry, as well as a module cover. Normally, three passive infrared motion sensors are set to face front, left and right directions.

In European patent publication number 1847822A1, the invention discloses an internal masking means to cover each pyro sensor. The masking means is made of opaque material and assumes substantially a L-shape. Its long arm is intermediately disposed in between the arc lens assembly and the pyro sensors. The free end of its short arm carries a serrated turning knob which is affixed to and protrudes through the module cover above the pyro sensor. An external turning force from a screwdriver is applied to the turning knob to turn the masking means. The long arm of the masking means at various positions either free or obstructs partially or completely infrared rays following the optical paths from the arc lens assembly to the pyro sensors.

In United States patent number 4,873,469, the invention discloses a lens cover (acting like a masking mechanism) which can be moved in left-right direction to unblock or block the passive infrared sensor selectively.

Other internal masking means are also taught in European patent publication numbers 1120763A9 and 1398742A1, and German patent publication number 4023341A1.

### SUMMARY OF THE INVENTION

The present invention has therefore as a primary object to provide an alternative internal masking mechanism for a motion sensor unit, so that passive infrared motion sensors can be unblocked or blocked selectively, as in long distance or short distance operation zone respectively.

Another object of the present invention is to allow the substantially up and down movement of the internal masking mechanism to be operable from an external adjustment knob on the motion sensor unit.

Still, another object of the present invention is to provide a visual means for long or short distance indication for the motion sensor unit.

These objects can be achieved in that the internal masking mechanism is disposed inside the motion sensor unit and is movable suspendedly in a substantially up and down direction, such that the passive infrared motion sensors are unblocked or blocked selectively, as in long distance operation zone or short distance operation zone respectively.

The internal masking mechanism is essentially L-shaped or inverted T-shaped where opposite edges of two parallel vertical rack elements are geared with a space in between and a horizontal element is arranged at the bottom of the two geared vertical rack elements, with a gear knob disposed in between the two geared vertical rack elements. The gear knob is operable from an external adjustment knob through an adjustment opening on a cylindrical cover of the motion sensor unit.

Additionally, a hole is provided at one side of the horizontal element and a reflector is inclinedly disposed facing the hole. A light emitting diode is disposed on a sensor printed circuit board, such that a light ray from the light emitting diode is directed towards the reflector and through the hole when motion is detected. This provides a visual means for long or short distance indication.

### BRIEF DESCRIPTION OF THE DRAWINGS

In order that the present invention may be more readily understood, the following description is given, by way of example, of two preferred embodiments of an internal masking mechanism in accordance with the present invention for a motion sensor unit. Reference will be made to the accompanying drawings, in which:
Figure 1a is a perspective view of a motion sensor unit.
Figure 1b is a side view of the motion sensor unit as shown in Figure 1a.
Figure 2 is a to-be-assembled view of a motion sensor unit with a first preferred embodiment of an internal masking mechanism in accordance with the present invention.
Figure 3a is a front partial cross-section view of a motion sensor unit including a first preferred embodiment of the internal masking mechanism, with its detection range set at a long distance operation zone.
Figure 3b is a side partial cross-section view of the motion sensor unit as shown in Figure 3a, illustrating the disposition of its various components.
Figure 4a is a front partial cross-section view of a motion sensor unit including a first preferred embodiment of the internal masking mechanism, with its detection range set at a short distance operation zone.
Figure 4b is a side partial cross-section view of the motion sensor unit as shown in Figure 4a, illustrating the disposition of its various components.
Figure 5 is a to-be-assembled view of a second preferred embodiment of an internal masking mechanism in accordance with the present invention.
Figure 6a is a front partial cross-section view of a motion sensor unit including a second preferred embodiment of the internal masking mechanism, with its detection range set at a long distance operation zone.
Figure 6b is a side partial cross-section view of the motion sensor unit as shown in Figure 6a, illustrating the disposition of its various components.
Figure 7a is a front partial cross-section view of a motion sensor unit including a second preferred embodiment of the internal masking mechanism, with its detection range set at a short distance operation zone.
Figure 7b is a side partial cross-section view of the motion sensor unit as shown in Figure 7a, illustrating the disposition of its various components.

### DETAILED DESCRIPTION

To facilitate explanation, like numerals are used to denote same component or element.

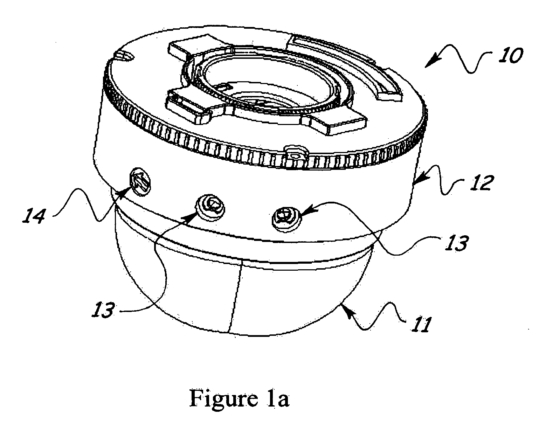

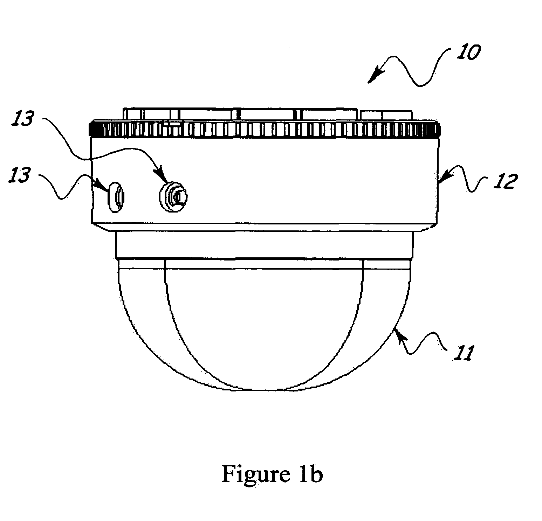

Figures 1a and 1b show the outward appearance of the present invention which looks like a prior art motion sensor unit.

The motion sensor unit (10) comprises a hemispherical lens assembly (11) and a cylindrical cover (12) which carries a plurality of openings (13) on its side. In this disclosure, at least one such opening (13) carries an external adjustment knob (14) which engages an internal masking mechanism (20) inside the motion sensor unit (10). The external adjustment knob (14) serves as a pivot from which the entire internal masking mechanism (20) is suspended therefrom. Furthermore, the internal masking mechanism (20) is movable suspendedly in a substantially up and down direction.

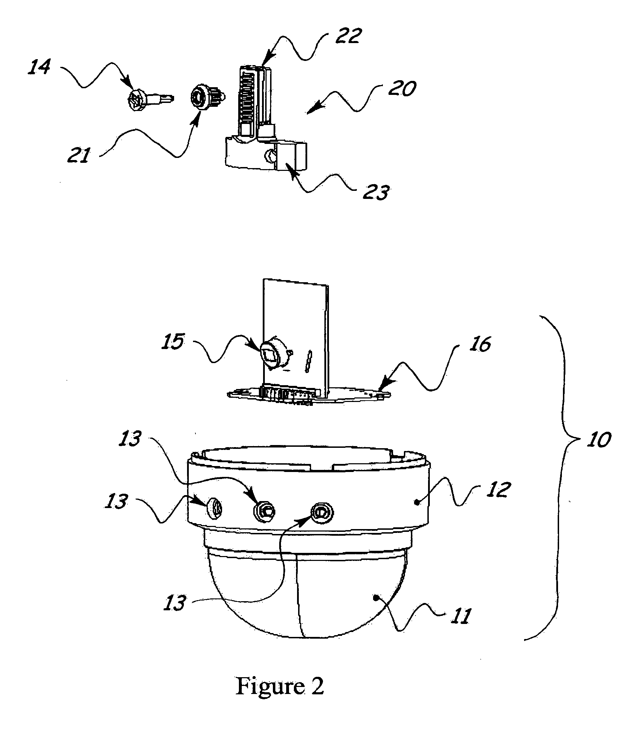

A first preferred embodiment of an internal masking mechanism (20) of the present invention is illustrated in Figures 2 to 4b.

Figure 2 shows a to-be-assembled view of a motion sensor unit (10) with a first preferred embodiment of the internal masking mechanism (20) in accordance with the present invention. The internal masking mechanism (20) is essentially L-shaped or inverted T-shaped where opposite edges of two parallel vertical rack elements (22) are geared with a space in between, and a horizontal element (23) at the bottom of the two geared vertical rack elements (22). A gear knob (21) is disposed in between the two geared vertical rack elements (22), being operable from the external adjustment knob (14) through the adjustment opening (13) on the cylindrical cover (12). The external adjustment knob (14) also serves as a pivot from which the entire internal masking mechanism (20) is suspended therefrom. The internal masking mechanism (20) is movable suspendedly in a substantially up and down direction. The horizontal element (23) of the internal masking mechanism (20) is thus disposed before and in the detection range of a passive infrared motion sensor (15) mounted on a sensor printed circuit board (16). The passive infrared motion sensor (15) faces dotted lens (not indicated) of the hemispherical lens assembly (11). Normally, there are three passive infrared motion sensors, set to face front, left and right directions. Only one passive infrared motion sensor (15) is shown in the drawing.

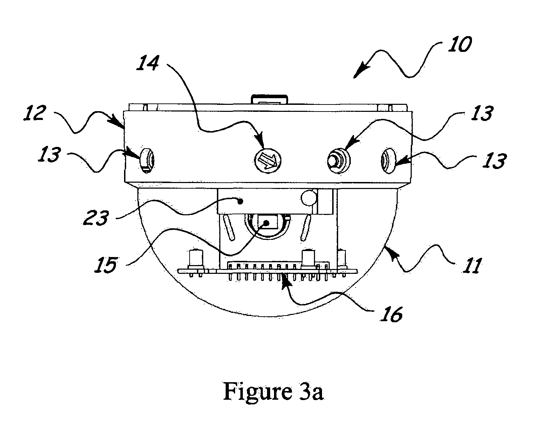

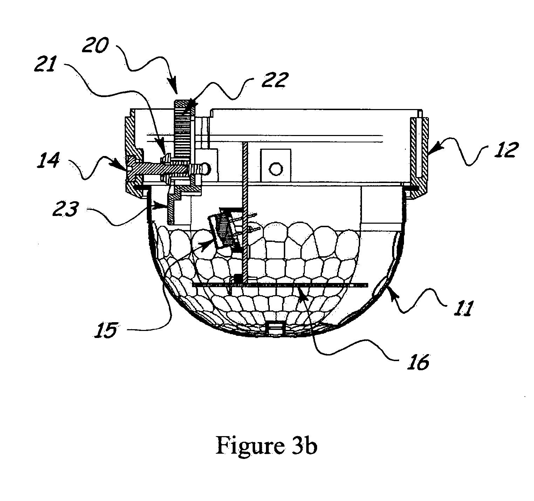

Figures 3a and 3b show schematically the internal masking mechanism (20) at a suspendedly moved up position. At this position, the passive infrared motion sensor (15) is not blocked by the horizontal element (23) of the internal masking mechanism (20) and its detection range is set at "long distance operation zone". The internal masking mechanism (20) is suspendedly moved up by turning the external adjustment knob (14) in one direction.

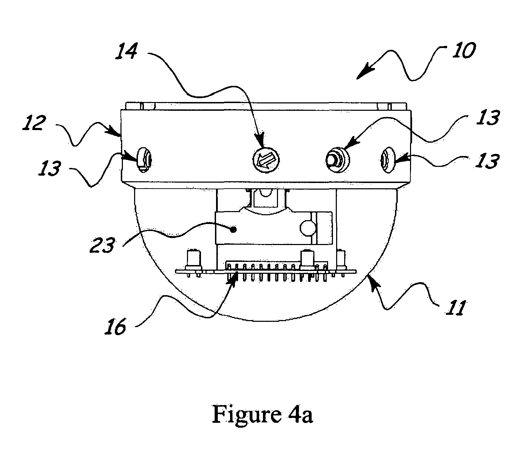

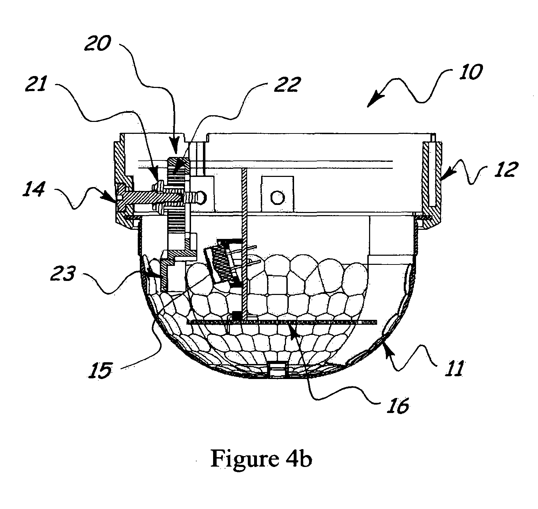

Figures 4a and 4b show schematically the internal masking mechanism (20) at a suspendedly moved down position. At this position, the passive infrared motion sensor (15) is blocked by the horizontal element (23) of the internal masking mechanism (20) and its detection range is set at "short distance operation zone". The internal masking mechanism (20) is suspendedly moved down by turning the external adjustment knob (14) in the opposite direction.

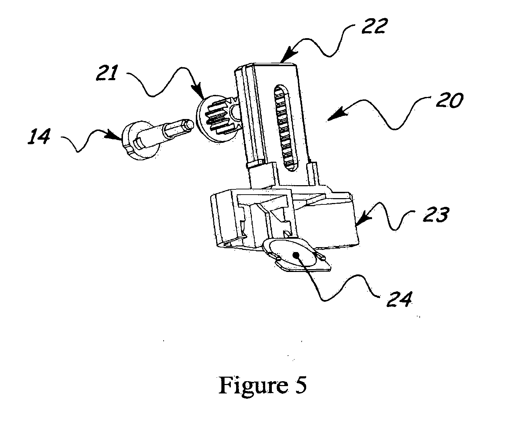

According to the teaching of the present invention, a second preferred embodiment of the internal masking mechanism (20) is illustrated in Figures 5 to 7b, where a visual means for long or short distance indication is additionally provided.

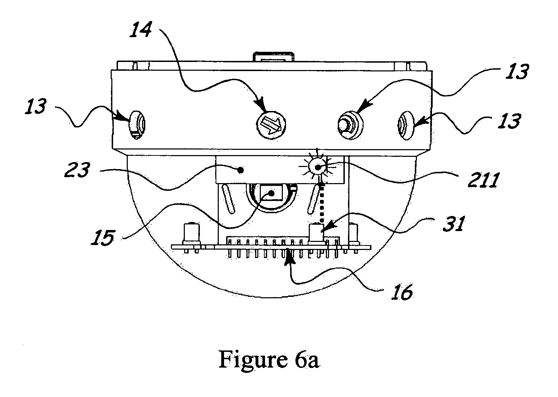

Figure 5 shows schematically the same essentially L-shaped or inverted T-shaped internal masking mechanism (20) equipped with the visual means. A light emitting diode (31) is disposed on the sensor printed circuit board (16) as seen in Figure 6a. One side of the horizontal element (23) is internally disposed with an inclined reflector (24) facing a hole (211). When motion is detected, light ray from the light emitting diode (31) is directed towards the reflector (24), so that the light ray can be reflected through the hole (211). This reflected light is visible through the hemispherical lens assembly (11). This reflected light provides a distance indication of the detection view, as the internal masking mechanism (20) is moved up or moved down.

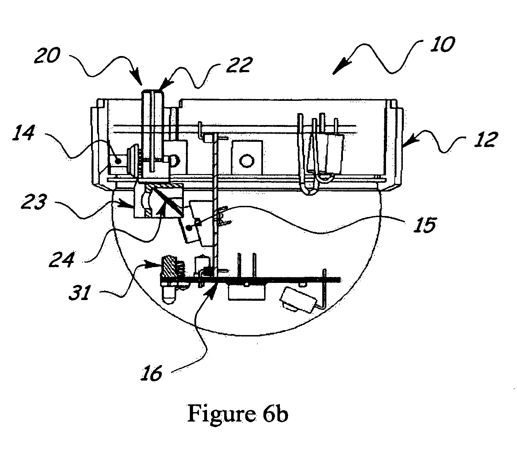

Figures 6a and 6b show schematically the second preferred embodiment of the internal masking mechanism (20) at a suspendedly moved up position. At this position, the passive infrared motion sensor (15) is not blocked by the horizontal element (23) of the internal masking mechanism (20) and its detection range is set at "long distance operation zone". The internal masking mechanism (20) is suspendedly moved up by turning the external adjustment knob (14) in one direction.

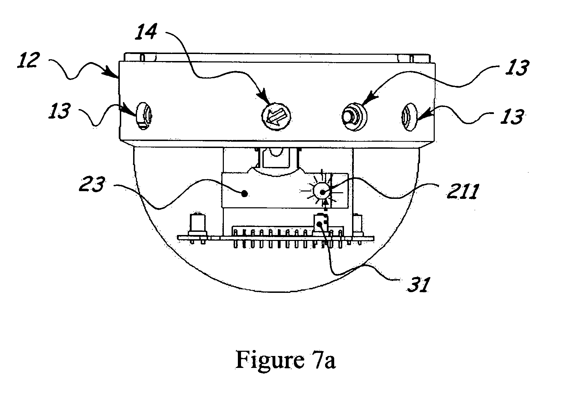

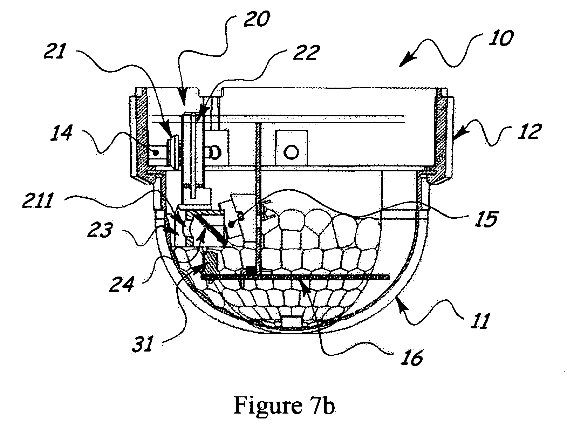

Figures 7a and 7b show schematically the internal masking mechanism (20) at a suspendedly moved down position. At this position, the passive infrared motion sensor (15) is blocked by the horizontal element (23) of the internal masking mechanism (20) and its detection range is set at "short distance operation zone". The internal masking mechanism (20) is suspendedly moved down by turning the external adjustment knob (14) in the opposite direction.

## Claims

1. A motion sensor unit (10) comprising a hemispherical lens assembly (11) and a cylindrical cover (12) carrying a plurality of openings (13) on its side and including a sensor printed circuit board (16) mounted with at least one passive infrared motion sensor (15) thereon, and an internal masking mechanism (20), being disposed inside the motion sensor unit (10) before and in the detection range of the passive infrared motion sensors (15), and moving suspendedly in a substantially linear direction, such that the passive infrared motion sensors (15) are unblocked or blocked selectively, is **characterised in** which
the internal masking mechanism (20) is essentially L-shaped or inverted T-shaped, where opposite edges of two parallel vertical rack elements (22) are geared with a space in between, and a horizontal element (23) is arranged at the bottom of the two geared vertical rack elements (22), with a gear knob (21) disposed in between the two geared vertical rack elements (22) and being operable from an external adjustment knob (14) through an adjustment opening (13) on the cylindrical cover (12),
whereby the horizontal element (23) of the internal masking mechanism (20) selectively unblocks or blocks the passive infrared motion sensors (15).

2. A motion sensor unit (10) including the internal masking mechanism (20) as in Claim 1 in which the external adjustment knob (14) serves as a pivot from which the entire internal masking mechanism (20) is suspended therefrom.

3. A motion sensor unit (10) including the internal masking mechanism (20) as in Claim 1 in which a hole (211) is provided at one side of the horizontal element (23);
a reflector (24) is inclinedly disposed facing the hole (211); and
a light emitting diode (31) is disposed on the sensor printed circuit board (16),
such that light ray from the light emitting diode (31) is directed towards the reflector (24) and through the hole (211) when motion is detected,
whereby a visual means for distance indication is provided with the substantially up and down direction of the internal masking mechanism (20).

4. A motion sensor unit (10) including the internal masking mechanism (20) as in Claim 1 in which the horizontal element (23) of the internal masking mechanism (20) can be suspendedly moved up to unblock the passive infrared motion sensor (15) mounted on the sensor printed circuit board (16) as in a long distance operation zone.

5. A motion sensor unit (10) including the internal masking mechanism (20) as in Claim 1 in which the horizontal element (23) of the internal masking mechanism (20) can be suspendedly moved down to block the passive infrared motion sensor (15) mounted on the sensor printed circuit board (16) as in a short distance operation zone.

## Patentansprüche

1. Bewegungssensoreinheit (10) mit einer halbkugelförmigen Linsenbaugruppe (11) und einem zylindrischen Deckel (12), der mehrere Öffnungen (13) an seiner Seite enthält und eine Sensorleiterplatte (16) aufweist, die mit mindestens einem passiven Infrarot-Bewegungssensor (15) darauf angebracht ist, und mit einem inneren Abdeckmechanismus (20), der innerhalb der Bewegungssensoreinheit (10) vor und in dem Erfassungsbereich der passiven Infrarot-Bewegungssensoren (15) angeordnet ist und sich in einer im Wesentlichen linearen Richtung aufgehängt bewegt, so dass die passiven Infrarot-Bewegungssensoren (15) wahlweise freigegeben oder blockiert werden, **dadurch gekennzeichnet, dass**
der innere Abdeckmechanismus (20) im Wesentlichen die Form eines L oder eines umgedrehten T hat, bei dem gegenüberliegende Ränder von zwei parallelen senkrechten Zahnstangenelementen (22) mit einem dazwischenliegenden Zwischenraum im Eingriff sind und ein horizontales Element (23) im unteren Teil der beiden im Eingriff stehenden senkrechten Zahnstangenelemente (22) angeordnet ist, wobei zwischen den beiden im Eingriff stehenden senkrechten Zahnstangenelementen (22) ein Zahnradknopf (21) angeordnet ist, der ausgehend von einem äußeren Einstellknopf (14) durch eine Einstellöffnung (13) am zylindrischen Deckel (12) bedienbar ist,
wodurch das horizontale Element (23) des inneren Abdeckmechanismus (20) die passiven Infrarot-Bewegungssensoren (15) wahlweise freigibt oder blockiert.

2. Bewegungssensoreinheit (10) mit dem inneren Abdeckmechanismus (20) nach Anspruch 1, bei der der äußere Einstellknopf (14) als Drehzapfen dient, ausgehend von dem der gesamte innere Abdeckmechanismus (20) daran aufgehängt ist.

3. Bewegungssensoreinheit (10) mit dem inneren Abdeckmechanismus (20) nach Anspruch 1, bei der an einer Seite des horizontalen Elements (23) ein Loch (211) vorgesehen ist,
ein Reflektor (24) gegenüber dem Loch (211) geneigt angeordnet ist und
eine Leuchtdiode (31) auf der Sensorleiterplatte (16) angeordnet ist,
so dass bei der Erfassung einer Bewegung ein Lichtstrahl von der Leuchtdiode (31) zum Reflektor (24) und durch das Loch (211) geleitet wird,
wodurch mit der im Wesentlichen nach oben und nach unten verlaufenden Bewegung des inneren Abdeckmechanismus (20) eine optische Einrichtung für die Abstandsangabe bereitgestellt wird.

4. Bewegungssensoreinheit (10) mit dem inneren Abdeckmechanismus (20) nach Anspruch 1, bei der das horizontale Element (23) des inneren Abdeckmechanismus (20) aufgehängt nach oben bewegt werden kann, um den auf der Sensorleiterplatte (16) angebrachten passiven Infrarot-Bewegungssensor (15) als in einem Fernbetriebsbereich liegend freizugeben.

5. Bewegungssensoreinheit (10) mit dem inneren Abdeckmechanismus (20) nach Anspruch 1, bei der das horizontale Element (23) des inneren Abdeckmechanismus (20) aufgehängt nach unten bewegt werden kann, um den auf der Sensorleiterplatte (16) angebrachten passiven Infrarot-Bewegungssensor (15) als in einem Nahbetriebsbereich liegend zu blockieren.

## Revendications

1. Unité de détection de mouvement (10) comprenant un assemblage de lentille hémisphérique (11) et un recouvrement cylindrique (12) portant une pluralité d'ouvertures (13) sur son côté et comprenant une carte de circuits imprimés de détecteur (16) sur laquelle est monté au moins un détecteur de mouvement à infrarouge passif (15), et un mécanisme de masquage interne (20), qui est disposé à l'intérieur de l'unité de détection de mouvement (10) avant et dans la plage de détection des détecteurs de mouvement à infrarouge passifs (15), et qui se déplace en suspension dans un sens sensiblement linéaire, de sorte que les détecteurs de mouvement à infrarouge passifs (15) soient sélectivement débloqués ou bloqués, est **caractérisé en ce que**
le mécanisme de masquage interne (20) est essentiellement en forme de L ou en forme de T inversé, où des bords opposés de deux éléments de crémaillère verticaux parallèles (22) sont engrenés avec un espace entre eux, et un élément horizontal (23) est agencé au bas des deux éléments de crémaillère verticaux engrenés (22), avec une molette d'engrenage (21) disposée entre les deux éléments de crémaillère verticaux engrenés (22) et étant utilisable à partir d'une molette d'ajustement externe (14) à travers une ouverture d'ajustement (13) sur le couvercle cylindrique (12),
de telle manière que l'élément horizontal (23) du mécanisme de masquage interne (20) débloque ou bloque sélectivement les détecteurs de mouvement à infrarouge passifs (15).

2. Unité de détection de mouvement (10) comprenant le mécanisme de masquage interne (20) selon la revendication 1 dans lequel la molette d'ajustement externe (14) sert de pivot auquel tout le mécanisme de masquage interne (20) est suspendu.

3. Unité de détection de mouvement (10) comprenant le mécanisme de masquage interne (20) selon la revendication 1 dans lequel un trou (211) est fourni sur un côté de l'élément horizontal (23) ;
un réflecteur (24) est disposé de manière inclinée faisant face au trou (211) ; et
une diode électroluminescente (31) est disposée sur la carte de circuits imprimés de détecteur (16),
de sorte qu'un rayon lumineux provenant de la diode électroluminescente (31) soit dirigé vers le réflecteur (24) et à travers le trou (211) lorsqu'un mouvement est détecté,
de telle manière qu'un moyen visuel d'indication de distance soit fourni avec le sens sensiblement vers le haut et vers le bas du mécanisme de masquage interne (20).

4. Unité de détection de mouvement (10) comprenant le mécanisme de masquage interne (20) selon la revendication 1 dans lequel l'élément horizontal (23) du mécanisme de masquage interne (20) peut être déplacé vers le haut en suspension pour débloquer le détecteur de mouvement à infrarouge passif (15) monté sur la carte de circuits imprimés de détecteur (16) comme dans une zone de fonctionnement de longue distance.

5. Unité de détection de mouvement (10) comprenant le mécanisme de masquage interne (20) selon la revendication 1 dans lequel l'élément horizontal (23) du mécanisme de masquage interne (20) peut être déplacé vers le bas en suspension pour bloquer le détecteur de mouvement à infrarouge passif (15) monté sur la carte de circuits imprimés de détecteur (16) comme dans une zone de fonctionnement de courte distance.
